# FASCICULE DE BREVET EUROPEEN

(11) **EP 1 631 842 B1**
(45) Date de publication et mention de la délivrance du brevet: **28.12.2016**
(21) Numéro de dépôt: 04735895.7
(22) Date de dépôt: 03.06.2004
(51) Int. Cl.: G01S 13/00, G01S 15/10, G01S 15/87

(54) **ARCHITECTURE D'UN SYSTEME MULTISTATIQUE ACOUSTIQUE**
ARCHITEKTUR EINES MULTISTATISCHEN AKUSTISCHEN SYSTEMES
ARCHITECTURE OF AN ACOUSTIC MULTISTATIC SYSTEM

(30) Priorité: 06.06.2003 FR 0306883
(43) Date de publication de la demande: 08.03.2006
(73) Titulaire: THALES, 92400 Courbevoie (FR)
(72) Inventeur: BAUDOUX, Jean-Pierre Thales Intellectual Property, F-94117 Arcueil (FR)
(74) Mandataire: Lucas, Laurent Jacques
(86) Numéro de dépôt international: PCT/EP2004/051007
(87) Numéro de publication internationale: WO 2004/109329

(56) Documents cités:
- GB-A- 2 206 762
- US-A- 4 446 538
- US-A- 4 513 401
- US-A- 5 099 458
- US-A- 5 867 800

## Description

La présente invention concerne un système sonar multistatique dans lequel la communication entre la base émettrice et les bases réceptrices, chargées de la détection des échos sonars, se fait par voie acoustique., Ce système permet notamment de s'affranchir des inconvénients occasionnés par l'utilisation de communications radio ou de communications par satellite, généralement utilisées pour synchroniser les fonctions d'émission et de réception. Ce système est en particulier destiné à une utilisation par des bâtiments sous-marins en plongée.

On connait aussi des systèmes acoustiques monostatiques comprenant une base émettrice et une base réceptrice, la base émettrice étant la base réceptrice. Le document US 5 099 458 décrit un exemple de système acoustique monostatique selon le préambule de la revendication 1.

Une caractéristique importante des systèmes sonars multistatiques consiste dans la séparation physique existant entre la base émettrice à l'origine de l'impulsion sonar et les bases réceptrices chargées de la détection et de la localisation des échos sonars. De tels systèmes présente notamment l'avantage de posséder une architecture souple et modulaire, dont la complexité peut être adaptée à la situation géographique et opérationnelle. Le sonar multistatique ainsi formé peut comporter selon les cas, un nombre variable de bases réceptrices. En revanche une telle architecture nécessite l'existence de moyens de communication entre la base émettrice qui synthétise et émet l'impulsion sonar et les bases réceptrices qui reçoivent les échos. En effet, dans la mesure où l'on souhaite réaliser une détection cohérente, les bases réceptrices doivent être informées des paramètres de fonctionnement du système. Ces paramètres renseignent par exemple sur le type d'impulsion émise, la fréquence d'émission, la période de répétition ou encore sur l'instant d'émission. D'autres informations comme la position de la base émettrice et celle des bases réceptrices, qui permettent de référencer les mesures des instants d'arrivée des échos, passent également par ces moyens de communication. Pour établir une communication entre la base émettrice et les bases réceptrices, il est de pratique courante et bien connue d'utiliser une liaison radioélectrique, par exemple par voie hertzienne ou par satellite. Les informations transmises sont généralement de deux types:
- des informations de contexte concernant la nature de l'impulsion émise (codage, durée, etc..), la position de la base émettrice, la configuration générale du système sonar ou encore une information de date,
- une information de synchronisation permettant de connaître de façon précise l'instant d'émission de l'impulsion sonar et de calculer la distance séparant les objets ayant renvoyé des échos des bases réceptrices.
Dans la suite du document ces informations sont appelées informations de mode.

L'utilisation d'une liaison radioélectrique présente l'avantage de permettre la transmission simultanée d'un grand nombre d'informations, la bande passante du signal émis pouvant être importante. En revanche dans un certain nombre de circonstances une liaison radioélectrique s'avère difficile voire impossible à utiliser. C'est notamment le cas pour les navires sous-marins lorsqu'ils sont en plongée. C'est aussi le cas par exemple lorsque le contexte opérationnel exclut l'utilisation d'émissions radioélectriques, pour des raisons de discrétion.

L'objet de l'invention pallie ces inconvénients en proposant un système sonar multistatique dans lequel la transmission des informations de fonctionnement entre la base émettrice et les bases réceptrices est effectuée au moyen d'un signal acoustique.

Le système selon l'invention présente, entre autre avantage, celui de fonctionner quelle que soit la profondeur d'immersion des bases émettrice et réceptrices et peut donc être mis en oeuvre par des sous-marins en plongée. Le système présente également l'avantage de permettre la transmission en temps réel des informations de fonctionnement. Ces informations sont transmises au rythme des impulsions sonar. Le signal acoustique portant les informations de fonctionnement et l'impulsion sonar, sont avantageusement transmis par un seul dispositif émetteur, les deux signaux étant séparés par un intervalle de temps Δt qui peut être variable et dont la valeur peut être contenue dans les informations de fonctionnement. Ces dernières peuvent en outre être cryptées

D'autres caractéristiques et avantages apparaîtront au fil de la description illustrée par les figures1 à 3 qui représentent:
- La figure 1, une illustration d'un système sonar multistatique selon l'art antérieur,
- La figure 2, une illustration d'un système selon l'invention,
- La figure 3, une illustration de la structure du signal acoustique émis par le système selon l'invention.

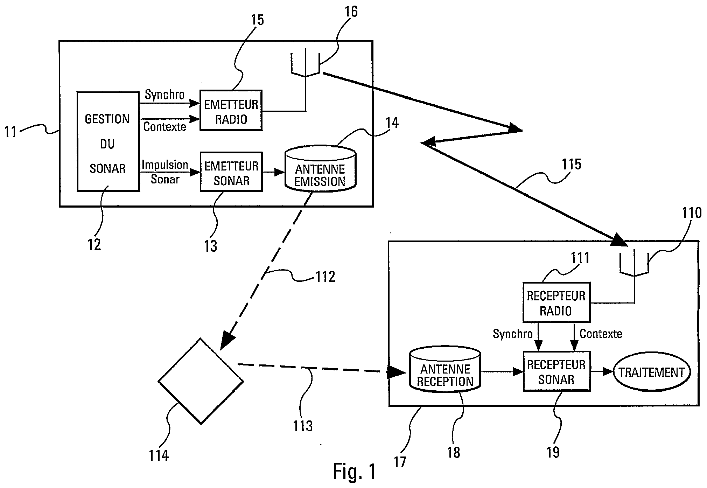

Les illustrations des figures 1 à 3 sont présentées à titre d'exemple afin de faciliter la description de l'invention. Elles ne représentent bien entendu pas une limitation quant à la structure ou à la réalisation du système selon l'invention.

La figure 1 illustre une structure type de système sonar multistatique connue de l'état de la technique.

Cette structure comporte une base émettrice et une ou plusieurs bases réceptrices. Pour des raisons de clarté la figure 1 ne fait figurer qu'une base réceptrice.

La base émettrice 11 comporte principalement deux sous-ensembles, un sous-ensemble destiné à l'émission de l'impulsion sonar et un sous-ensemble destiné à la transmission des informations de fonctionnement. Ces deux sous-ensembles sont par ailleurs gérés par l'organe 12 de gestion du sonar.

Le sous-ensemble destiné à l'émission de l'impulsion sonar comporte de manière classique un émetteur sonar 13 et une antenne acoustique 14.

Le sous-ensemble destiné à la transmission des informations de mode comporte quant à lui un émetteur radio 15 et un antenne 16.

De façon symétrique, chaque base réceptrice 17 comporte un sous-ensemble de réception des échos sonars 113 réfléchis par les objets 114 se trouvant dans la zone couverte par l'émission sonar 112. Ce sous-ensemble comportant lui-même une antenne acoustique 18 et un récepteur sonar passif 19.

La base réceptrice 17 comporte également un sous-ensemble de réception des informations de fonctionnement comportant lui-même une antenne 110 et un récepteur radio 111.

L'illustration de la figure 1 permet d'appréhender les limitations d'une telle structure. En particulier, l'utilisation d'une liaison radio électrique 115 pour les communications entre la base émettrice et les bases réceptrices implique nécessairement qu'aux moins les éléments 16 et 20 restent émergés. Le système est donc peu compatible avec des bases 11 et 17 portées par des navires sous-marins évoluant en profondeur. D'autre part, on peut noter que même en conditions opérationnelles, dans la mesure où la base émettrice doit être capable de communiquer avec plusieurs bases réceptrices, il est difficile d'utiliser une émission radioélectrique très directive. La communication de la base émettrice avec les bases réceptrices engendre donc une émission sensible aux conditions météorologiques, peu discrète et détectable par des éléments hostiles. Il en résulte des risques importants de brouillage ou de perturbation. Cette absence de discrétion qui révèle la présence du système peut rendre ce système inefficace.

Par ailleurs une structure telle qu'illustrée par la figure 1 s'avère complexe dans sa structure, la transmission des informations de fonctionnement nécessitant une chaîne de transmission 15, 16 propre à cette fonction et indépendante de l'émission de l'impulsion sonar.

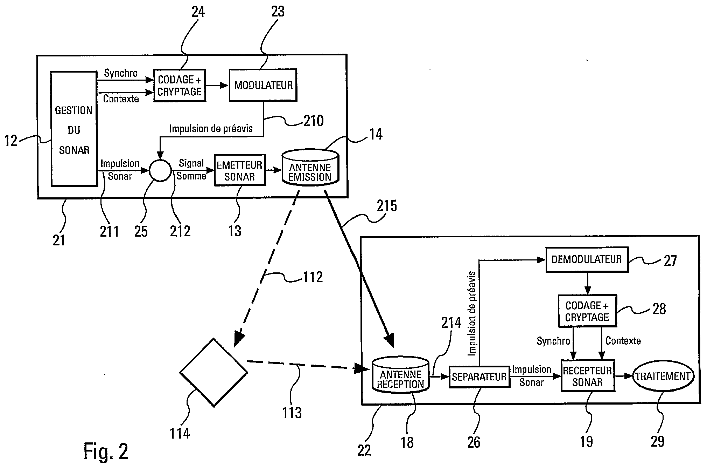

La figure 2 présente de manière schématique la structure de base du système selon l'invention. Comme celui décrit à la figure 1, ce système comporte une base émettrice 21 et généralement plusieurs bases réceptrices 22. En revanche, contrairement au système illustré par la figure 1, la base 21 communique avec les bases 22 par une liaison acoustique. Les informations de mode et l'impulsion sonar sont ainsi transmises par le même canal.

A cet effet la base émettrice 21 comporte un modulateur 23, permettant de générer une impulsion acoustique modulée 210. Cette impulsion est modulée par les informations de mode codées au moyen du dispositif de codage 24. Le codage des informations peut par exemple consister en la réalisation d'un message binaire comportant le nombre de bits nécessaires à la représentation des informations. Le modulateur 23 permet de moduler l'impulsion acoustique au moyen du signal constitué par le message binaire. La modulation réalisée peut par exemple consister en une modulation par saut de fréquence ou de phase. L'impulsion acoustique modulée, porteuse des informations de mode, est également appelée impulsion de préavis.

La base émettrice 21 comporte également un dispositif sommateur 225 qui permet d'effectuer la somme de l'impulsion impulsion de préavis et de l'impulsion sonar 211 fournie par le dispositif de gestion 12. Elle comporte enfin un émetteur sonar 13 et une antenne acoustique 14 qui émettent le signal somme 212 dans le milieu de propagation.

De manière analogue, la structure de chaque base réceptrice est adaptée à la réception des informations de mode et des échos sonars sur un même canal de réception. A cet effet la base comporte une unique antenne acoustique 18 qui transforme les signaux reçus en signaux électriques 24. Les signaux reçus correspondent d'une part aux messages d'information qui proviennent de la base émettrice en transmission directe 215 et d'autre part aux échos 217 réfléchis par les objets 218 pouvant se trouver dans la zone couverte par l'émission sonar 216. La base réceptrice comporte également un dispositif séparateur 26 permettant de séparer les échos sonar des impulsions de préavis. Elle comporte aussi un démodulateur 27 et un dispositif de décodage 28 permettant de récupérer les informations de mode nécessaires pour configurer le récepteur 19 de façon à optimiser la réception des échos sonar. Elle comporte enfin des moyens de traitement 29 qui traitent les échos sonar reçus de façon à déterminer la position des objets 114.

Selon une variante de structure, dans le cas d'une antenne acoustique comportant plusieurs hydrophones, il est possible d'affecter plus spécifiquement certains hydrophones à la réception de l'impulsion de préavis. L'antenne de la base réceptrice est alors scindée en deux sous-ensembles. Cette structure peut aboutir à la séparation complète des voies de réceptions des impulsions de préavis et de réception des échos sonar, la base réceptrice ne comporte alors plus de dispositif séparateur 26.

Comme on peut le constater sur la figure 2, la structure du système selon l'invention présente l'avantage de ne pas comporter de liaison radio électrique et donc de pouvoir fonctionner en immersion totale. Elle permet également de faire passer par un même canal les informations de mode et l'impulsion sonar et d'assurer ainsi une concordance temporelle entre les deux signaux.

La structure du système selon l'invention peut être avantageusement complétée par des moyens de cryptage / décryptage associés aux moyens de codage 24 et de décodage 28 des informations de mode. Ces moyens ont pour effet d'interdire une lecture directe des informations de mode par des tiers.

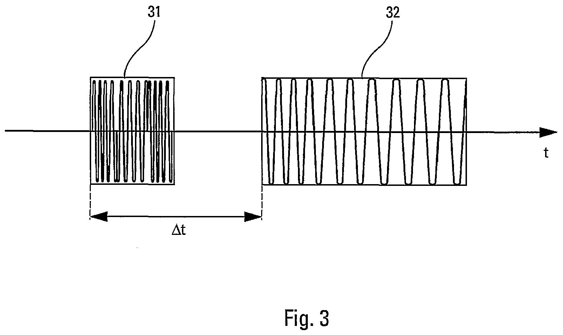

La figure 3 présente de manière schématique et générale la structure du signal exploité par le système selon l'invention. Le signal présenté à la figure 3 est émis par la base émettrice 21 à destination des bases réceptrices. Il comporte notamment l'impulsion de préavis 31 qui contient les informations de mode qui emprunte le trajet direct 215 de la figure 2.

Le signal émis comporte également l'impulsion sonar 32 proprement dite. Sur la figure 3 les deux impulsions qui composent le signal d'émission sont espacées d'un intervalle de temps Δt. Cet intervalle de temps permet notamment aux diverses bases réceptrices composant le système de recevoir et de décoder l'impulsion de préavis avant de recevoir un écho de l'impulsion sonar. Les informations de mode portées par l'impulsion de préavis sont exploitées par les bases réceptrices pour configurer leur récepteur conformément à la forme de l'impulsion émise.

La durée Δt peut être variable en fonction des applications. Elle peut par exemple avoir été prédéterminée pour chaque mode de fonctionnement et être connue des bases réceptrices. Elle peut encore être fixée pendant le fonctionnement du système et être transmise aux bases réceptrices comme une information de mode. La contrainte sur la valeur de Δt est notamment imposée par le temps nécessaire aux bases réceptrices pour se configurer avant de recevoir les échos issus de l'impulsion sonar et pour prendre en compte les durées des trajets acoustiques nécessaires.

Dans un mode de réalisation particulier, on peut même envisager un intervalle Δt nul. Les deux impulsions sont alors immédiatement consécutives.

Comme l'illustre la figure 3, le signal émis par la base émettrice est, dans le cas du système selon l'invention, un signal composite formé de deux impulsions de structures différentes.

L'impulsion sonar est une impulsion de forme classique, connu par ailleurs. Elle peut par exemple être de fréquence fixe ou encore affectées d'une loi de modulation particulière.

L'impulsion de préavis quant à elle, fait l'objet d'une modulation particulière. Le signal modulant représente l'ensemble des informations de mode à transmettre. Il est par exemple constitué par la concaténation des données relatives aux informations de mode, mises sous forme binaire. Ces données concaténées forment un mot ou une trame comportant un nombre de bits donné fonction de la nature des informations transmises.

Ce signal vient moduler l'impulsion de préavis au travers d'un dispositif de modulation numérique, de type modem par exemple. Comme il a été dit précédemment, le code de modulation peut par exemple être un codage par sauts de phase ou de fréquence, sauts de phase et de fréquence ou tout autre codage numérique.

La durée de l'impulsion de préavis est fonction du nombre d'informations de mode à transmettre aux bases réceptrices. En pratique la durée de l'impulsion de préavis est de l'ordre d'une à quelques secondes. Cette durée qui correspond au temps nécessaire pour transmettre quelques centaines à quelques milliers de bits d'information, est compatible des bandes passantes classiques des émetteurs sonar. Le système selon l'invention ne nécessite donc avantageusement pas l'utilisation de moyens d'émission particuliers. Ainsi, par exemple, un émetteur disposant d'une bande passante égale à 1kHz pourra transmettre une impulsion de préavis de 1s véhiculant un message de mode d'une longueur environ égale à 1kbits.

Le fonctionnement du système selon l'invention peut être décrit à l'aide des figures 2 et 3. Le signal émis par la base émettrice est un signal comportant deux impulsions: une impulsion de préavis 31 et une impulsion sonar 31. La base émettrice peut par exemple être le sonar actif d'un sous-marin. L'impulsion de préavis est reçue en de façon directe par les bases réceptrices. Chacune des bases réceptrices est par ailleurs équipée de manière connue, de moyens lui permettant de connaître sa position par rapport à la base émettrice. Chaque base réalise le décodage des informations de mode. Ces informations comportent notamment la valeur Δt du temps qui sépare l'instant d'émission de l'impulsion de préavis, de celui d'émission de l'impulsion sonar. La connaissance de Δt permet aux bases réceptrices de connaître l'instant d'émission de l'impulsion sonar et d'effectuer une mesure du retard entre l'impulsion émise et l'instant d'arrivée d'un écho. L'ensemble des bases réceptrices se comporte ainsi comme un sonar actif multistatique.

Sur l'illustration de la figure 2, la base émettrice est figurée comme comportant un émetteur sonar unique, l'impulsion de préavis et l'impulsion sonar étant émise par un même émetteur 13. Cette solution représente un mode de réalisation économique en terme d'encombrement et de coût. Néanmoins cette solution n'est pas limitative et il est bien entendu possible d'utiliser deux émetteurs acoustiques différents si la nécessité de disposer de deux émetteurs séparés apparaît.

Selon un mode de réalisation du système, l'instant d'émission de l'impulsion sonar est déduit de l'instant de réception de l'impulsion de préavis. Les bases réceptrices effectuent par exemple une détection de l'enveloppe de l'impulsion de préavis et attribuent à l'impulsion sonar un instant d'émission fonction l'instant de réception de l'impulsion de préavis et de Δt.

Selon un autre mode de réalisation, les bases réceptrices et la base émettrice sont préalablement synchronisées. Les données de mode intègrent alors une information fournissant la date précise d'émission de l'impulsion sonar, ce qui permet aux bases réceptrices de connaître l'instant d'émission de l'impulsion sonar.

La structure du signal émis présente l'avantage de rendre le système paramétrable et donc facilement adaptable. Elle permet notamment, grâce aux informations que l'on peut transmettre au travers de l'impulsion de préavis, de modifier en temps réel la configuration du système. En fonction des informations transmises, on peut par exemple, faire évoluer la fréquence d'émission de l'impulsion sonar, son type de modulation ou encore la valeur de l'écart Δt qui sépare l'impulsion de préavis de l'impulsion sonar : on rend ainsi difficile la protection contre un tel sonar. Il est en outre possible comme l'illustre la figure 2, d'effectuer le cryptage des informations de mode avant modulation. De la sorte, en l'absence de la clé de décryptage, il est impossible d'avoir accès aux paramètres de mode du système.

Dans la description qui précède le mode d'émission décrit comporte un signal émis systématiquement composé de deux impulsions. Un tel signal est nécessaire en particulier dans le cas où l'on souhaite pouvoir modifier certaines informations de mode d'une émission à l'autre. Il est néanmoins possible d'envisager des modes de fonctionnement plus simples, pour lesquels les paramètres de fonctionnement restent figés durant un temps relativement long. Dans ce cas il est par exemple possible de concevoir un système pour lequel le signal d'émission est composé tantôt d'une impulsion de préavis suivie d'une impulsion d'émission, tantôt simplement d'une impulsion d'émission. On peut également concevoir un système pour lequel le signal d'émission est composé d'une impulsion de préavis suivie de plusieurs impulsions d'émission. Le motif émis par le système selon l'invention peut prendre des formes diverses en fonction des applications.

Comme il a été dit précédemment le système selon l'invention s'applique notamment à la réalisation d'un sonar multistatique destiné à la localisation d'échos provenant d'objets situés dans une zone sous surveillance. Cependant, cette application n'est pas la seule envisageable et ne limite en rien le champ d'utilisation du système. Il est par exemple également possible de l'utiliser pour réaliser le positionnement de véhicules sous-marins autonomes. Dans ce type d'application, la base émettrice est située sur le navire autonome et les bases réceptrices sont par exemple positionnées sur des bâtiments de surface.

## Revendications

1. Système acoustique comportant au moins une base émettrice (21) comportant des moyens d'émission d'une impulsion sonar (32, 112, 211), et au moins une base réceptrice (22) comportant des moyens de réception (18, 19) et de traitement d'échos sonar (113) réfléchis par des objets (114) pouvant se trouver dans une zone couverte par l'impulsion sonar,
**caractérisé en ce que** le système acoustique est multistatique, **en ce que** la base émettrice (21) comporte également des moyens (23, 24) pour transmettre des informations de mode vers la base réceptrice (22) et **en ce que** les informations de mode sont transmises à la base réceptrice (22) sous forme acoustique par une impulsion acoustique de préavis (31, 210), ladite impulsion acoustique de préavis (31, 210) étant une impulsion acoustique modulée par un signal contenant lesdites informations de mode.

2. Système selon la revendication 1, dans lequel la base émettrice (21) comprend un dispositif de codage (24) permettant de coder les informations de mode de façon à générer un signal codant les informations de mode, un modulateur (23) permettant de générer une impulsion acoustique (210) modulée par le signal codant les informations de code, un dispositif sommateur (25) permettant d'effectuer la somme de l'impulsion acoustique de préavis (31, 210) et de l'impulsion sonar (32, 112, 211) fournie par un organe de gestion (12), et un émetteur sonar (13) et une antenne acoustique (14) émettant le signal somme généré par le dispositif sommateur (25).

3. Système selon l'une quelconque des revendications précédentes, dans lequel la base réceptrice (22) comprend une unique antenne acoustique de réception (18) recevant les échos sonar (113) et l'impulsion acoustique de préavis (31, 210) et un dispositif séparateur (26) permettant de séparer les échos sonar (113) des impulsions de préavis (31,210).

4. Système selon l'une quelconque des revendications précédentes, comprenant une pluralité de bases réceptrices (22).

5. Système selon l'une quelconque des revendications précédentes, dans lequel l'impulsion sonar (32, 112, 211) et l'impulsion de préavis (31, 210) sont séparées par un intervalle de temps Δt fonction du mode de fonctionnement du système et connu de la base réceptrice (22).

6. Système selon l'une quelconque des revendications précédentes, **caractérisée en ce que** l'impulsion sonar (32, 112, 211) et l'impulsion de préavis (31, 210) sont séparées par un intervalle de temps Δt dont la durée est transmise à la base réceptrice (22) avec les informations de mode.

7. Système selon l'une des revendications 5 ou 6, **caractérisée en ce que**, l'intervalle de temps Δt est égal à zéro l'impulsion sonar (32, 112, 211) et l'impulsion de préavis (31, 210) étant immédiatement consécutives.

8. Système selon l'une des revendications précédentes, **caractérisée en ce que** l'impulsion de préavis (31, 210) et l'impulsion sonar (32,112, 211) sont émises par un émetteur unique (13) émettant successivement l'impulsion de préavis (31, 210) et l'impulsion sonar (32,112, 211).

9. Système selon la revendication 1, **caractérisé en ce que** la modulation de l'impulsion de préavis (31, 210) par le signal modulant contenant les informations de mode, est un codage numérique.

10. Système selon la revendication 1, **caractérisé en ce que** la modulation de l'impulsion de préavis (31, 210) par le signal modulant contenant les informations de mode, est un codage par sauts de phase.

11. Système selon la revendication 1, **caractérisé en ce que** la modulation de l'impulsion de préavis (31, 210) par le signal modulant contenant les informations de mode, est un codage par sauts de fréquence.

12. Système selon la revendication 1, **caractérisé en ce que** la modulation de l'impulsion de préavis (31, 210) par le signal modulant contenant les informations de mode, est un codage par sauts de fréquence et de phase.

13. Système selon l'une quelconque des revendications précédentes, dans lequel l'instant d'émission de l'impulsion sonar (32, 112, 211) est déterminé à partir de l'instant de réception de l'impulsion de préavis (31, 210) par la base réceptrice (22) et du mode de fonctionnement.

14. Système selon l'une quelconque des revendications 1 à 12, **caractérisé en ce que** l'instant d'émission de l'impulsion sonar (32, 112, 211) est déterminé à partir de la date d'émission de ladite impulsion sonar (32, 112, 211), contenue dans le signal modulant contenant lesdites informations de mode.

15. Système selon l'une quelconque des revendications précédentes, **caractérisée en ce qu'**il comporte des moyens pour crypter les informations de mode.

16. Application du système selon l'une quelconque des revendications précédentes au contrôle de positionnement de navires sous-marins autonomes.

## Patentansprüche

1. Akustisches System, aufweisend mindestens eine Sendebasis (21), die Sendemittel eines Sonarimpulses (32, 112, 211) aufweist, und mindestens eine Empfangsbasis (22), die Empfangs- (18, 19) und Verarbeitungsmittel von Sonarechos (113) aufweist, die von Objekten (114) reflektiert werden, die sich in einer von dem Sonarimpuls abgedeckten Zone befinden können,
**dadurch gekennzeichnet, dass** das akustische System multistatisch ist, dass die Sendebasis (21) ebenfalls Mittel (23, 24) aufweist, um Modusinformationen an die Empfangsbasis (22) zu übertragen und dass die Modusinformationen an die Empfangsbasis (22) in akustischer Form von einem akustischen Vorwarnimpuls (31, 210) übertragen werden, wobei der akustische Vorwarnimpuls (31, 210) ein von einem Signal, das die Modusinformationen enthält, modulierter akustischer Impuls ist.

2. System nach Anspruch 1, wobei die Sendebasis (21) eine Codiervorrichtung (24) umfasst, die erlaubt, die Modusinformationen derart zu codieren, dass ein die Modusinformationen codierendes Signal erzeugt wird, einen Modulator (23), der erlaubt, einen von dem die Modusinformationen codierenden Signal modulierten akustischen Impuls (210) zu erzeugen, eine Summiervorrichtung (25), die erlaubt, die Summe des akustischen Vorwarnimpulses (31, 210) und des von einem Verwaltungsorgan (12) bereitgestellten Sonarimpulses (32, 112, 211) zu bilden, und einen Sonarsender (13) und eine akustische Antenne (14), die das von der Summiervorrichtung (25) erzeugte Summensignal senden.

3. System nach einem der vorangehenden Ansprüche, wobei die Empfangsbasis (22) eine einzige akustische Empfangsantenne (18) umfasst, die die Sonarechos (113) und den akustischen Vorwarnimpuls (31, 210) empfängt, und eine Trennvorrichtung (26), die erlaubt, die Sonarechos (113) von den Vorwarnimpulsen (31, 210) zu trennen.

4. System nach einem der vorangehenden Ansprüche, umfassend eine Vielzahl von Empfangsbasen (22).

5. System nach einem der vorangehenden Ansprüche, wobei der Sonarimpuls (32, 112, 211) und der Vorwarnimpuls (31, 210) durch ein Zeitintervall Δt getrennt sind, das vom Betriebsmodus des Systems abhängt und der Empfangsbasis (22) bekannt ist.

6. System nach einem der vorangehenden Ansprüche, **dadurch gekennzeichnet, dass** der Sonarimpuls (32, 112, 211) und der Vorwarnimpuls (31, 210) durch ein Zeitintervall Δt getrennt sind, dessen Dauer an die Empfangsbasis (22) mit den Modusinformationen übertragen wird.

7. System nach einem der Ansprüche 5 oder 6, **dadurch gekennzeichnet, dass** das Zeitintervall Δt gleich Null ist, wobei der Sonarimpuls (32, 112, 211) und der Vorwarnimpuls (31, 210) unmittelbar aufeinanderfolgend sind.

8. System nach einem der vorangehenden Ansprüche, **dadurch gekennzeichnet, dass** der Vorwarnimpuls (31, 210) und der Sonarimpuls (32, 112, 211) von einem einzigen Sender (13) gesendet werden, der aufeinanderfolgend den Vorwarnimpuls (31, 210) und den Sonarimpuls (32, 112, 211) sendet.

9. System nach Anspruch 1, **dadurch gekennzeichnet, dass** die Modulation des Vorwarnimpulses (31, 210) durch das modulierende Signal, welches die Modusinformationen enthält, eine digitale Codierung ist.

10. System nach Anspruch 1, **dadurch gekennzeichnet, dass** die Modulation des Vorwarnimpulses (31, 210) durch das modulierende Signal, welches die Modusinformationen enthält, eine Codierung durch Phasensprünge ist.

11. System nach Anspruch 1, **dadurch gekennzeichnet, dass** die Modulation des Vorwarnimpulses (31, 210) durch das modulierende Signal, welches die Modusinformationen enthält, eine Codierung durch Frequenzsprünge ist.

12. System nach Anspruch 1, **dadurch gekennzeichnet, dass** die Modulation des Vorwarnimpulses (31, 210) durch das modulierende Signal, welches die Modusinformationen enthält, eine Codierung durch Frequenz- und Phasensprünge ist.

13. System nach einem der vorangehenden Ansprüche, wobei der Sendemoment des Sonarimpulses (32, 112, 211) auf der Basis des Empfangsmoments des Vorwarnimpulses (31, 210) von der Empfangsbasis (22) und des Betriebsmodus bestimmt wird.

14. System nach einem der Ansprüche 1 bis 12, **dadurch gekennzeichnet, dass** der Sendemoment des Sonarimpulses (32, 112, 211) auf der Basis des Sendedatums des Sonarimpulses (32, 112, 211) bestimmt wird, das in dem modulierenden Signal, welches die Modusinformationen enthält, enthalten ist.

15. System nach einem der vorangehenden Ansprüche, **dadurch gekennzeichnet, dass** es Mittel umfasst, um die Modusinformationen zu verschlüsseln.

16. Anwendung des Systems nach einem der vorangehenden Ansprüche für die Positionskontrolle autonomer Unterseeboote.

## Claims

1. An acoustic system comprising at least one emission base (21) comprising means for emitting a sonar pulse (32, 112, 211), and at least one reception base (22) comprising means (18, 19) for receiving and processing sonar echoes (113) reflected by objects (114) that can be found in an area covered by said sonar pulse,
**characterised in that** said acoustic system is multi-static, **in that** said emission base (21) further comprises means (23, 24) for transmitting mode information to said reception base (22) and **in that** said mode information is transmitted to said reception base (22) in acoustic form by an acoustic notification pulse (31, 210), said acoustic notification pulse (31, 210) being an acoustic pulse modulated by a signal containing said mode information.

2. The system according to claim 1, wherein said emission base (21) comprises a coding device (24) for coding said mode information so as to generate a signal coding said mode information, a modulator (23) for generating an acoustic pulse (210) modulated by said signal coding said code information, an adder device (25) for carrying out the sum of said acoustic notification pulse (31, 210) and said sonar pulse (32, 112, 211) supplied by a management unit (12), and a sonar emitter (13) and an acoustic antenna (14) emitting the sum signal generated by said adder device (25).

3. The system according to any one of the preceding claims, wherein said reception base (22) comprises a single acoustic reception antenna (18) receiving said sonar echoes (113) and said acoustic notification pulse (31, 210) and a splitter device (26) for splitting said sonar echoes (113) from said notification pulses (31, 210).

4. The system according to any one of the preceding claims, comprising a plurality of reception bases (22).

5. The system according to any one of the preceding claims, wherein said sonar pulse (32, 112, 211) and said notification pulse (31, 210) are separated by a time slot Δt that is a function of the operating mode of said system and is known by said reception base (22).

6. The system according to any one of the preceding claims, **characterised in that** said sonar pulse (32, 112, 211) and said notification pulse (31, 210) are separated by a time slot Δt, the duration of which is transmitted to said reception base (22) with said mode information.

7. The system according to any one of claims 5 or 6, **characterised in that** said time slot Δt is equal to zero, with said sonar pulse (32, 112, 211) and said notification pulse (31, 210) being immediately consecutive.

8. The system according to any one of the preceding claims, **characterised in that** said notification pulse (31, 210) and said sonar pulse (32, 112, 211) are emitted by a single emitter (13) successively emitting said notification pulse (31, 210) and said sonar pulse (32, 112,211).

9. The system according to claim 1, **characterised in that** the modulation of said notification pulse (31, 210) by the modulating signal containing said mode information is a digital coding.

10. The system according to claim 1, **characterised in that** the modulation of said notification pulse (31, 210) by the modulating signal containing said mode information is a phase-hop coding.

11. The system according to claim 1, **characterised in that** the modulation of said notification pulse (31, 210) by the modulating signal containing said mode information is a frequency-hop coding.

12. The system according to claim 1, **characterised in that** the modulation of said notification pulse (31, 210) by the modulating signal containing said mode information is a phase-hop and frequency-hop coding.

13. The system according to any one of the preceding claims, wherein the emission instant of said sonar pulse (32, 112, 211) is determined on the basis of the reception instant of said notification pulse (31, 210) by said reception base (22) and said operating mode.

14. The system according to any one of claims 1 to 12, **characterised in that** the emission instant of said sonar pulse (32, 112, 211) is determined on the basis of the emission time of said sonar pulse (32, 112, 211) contained in the modulating signal containing said mode information.

15. The system according to any one of the preceding claims, **characterised in that** it comprises means for encrypting said mode information.

16. The application of the system according to any one of the preceding claims to controlling the positioning of autonomous submarine vessels.
